**Europäisches Patentamt**

**European Patent Office**

**Office européen des brevets**

(19)

(11) Veröffentlichungsnummer: **0 029 033**
**B1**

(12) EUROPÄISCHE PATENTSCHRIFT

(45) Veröffentlichungstag der Patentschrift:
**19.10.83**

(51) Int. Cl.³: **F 01 N 3/02**

(21) Anmeldenummer: **80900659.6**

(22) Anmeldetag: **02.04.80**

(86) Internationale Anmeldenummer:
**PCT/DE 80/00040**

(87) Internationale Veröffentlichungsnummer:
**WO 81/00277 (05.02.81 Gazette 81/4)**

(54) **VERFAHREN ZUR ENTGIFTUNG DER ABGASE EINES VERBRENNUNGSMOTORS ALS ANTRIEB EINER HEIZUNGS-WÄRMEPUMPENANLAGE SOWIE ABGASREINIGUNGSANLAGE ZUR DURCHFÜHRUNG DES VERFAHRENS.**

(30) Priorität: **04.04.79 DE 2913580**
**27.08.79 DE 2934591**
**01.03.80 DE 3007962**

(43) Veröffentlichungstag der Anmeldung:
**27.05.81 Patentblatt 81/21**

(45) Bekanntmachung des Hinweises auf die Patenterteilung:
**19.10.83 Patentblatt 83/42**

(84) Benannte Vertragsstaaten:
**AT CH DE FR GB LI**

(56) Entgegenhaltungen:
**CH-A-603 993**
**DE-C-308 759**
**DE-C-480 859**
**FR-A-2 046 678**
**GB-A-1 037 339**
**US-A-3 236 216**
**US-A-3 782 115**
**US-A-3 968 649**

(73) Patentinhaber: **CREDE, Helfried, Fuchsbichl 9b, D-8021 Icking (DE)**

(72) Erfinder: **CREDE, Helfried, Fuchsbichl 9b, D-8021 Icking (DE)**

(74) Vertreter: **Zipse + Habersack, Kemnatenstrasse 49, D-8000 München 19 (DE)**

Verfahren zur Entgiftung der Abgase eines Verbrennungsmotors als Antrieb einer
Heizungs-Wärmepumpenanlage sowie Abgasreinigungsanlage zur Durchführung des Verfahrens

Die Erfindung betrifft ein Verfahren zur Entgiftung der Abgase eines Verbrennungsmotors als Antrieb einer Heizungs-Wärmepumpenanlage gemäß dem Oberbegriff des Anspruchs 1 sowie eine Abgasreinigungsanlage zur Durchführung des Verfahrens.

In der nicht vorveröffentlichten DE-AS 2 744 615 wurde vorgeschlagen, zum Entgiften der Abgase und Nutzbarmachen der Abwärme eines als Antrieb für eine Heizungs-Wärmepumpenanlage benutzten Dieselmotors die Motorabgase zunächst durch Abgabe eines Teils ihres Wärmeinhalts an den Heizungskreislauf und dann durch Trennwand-Wärmetausch mit einem als Wärmequelle für den Verdampfer der Wärmepumpenanlage dienenden Wasserspeicher, dem auch Wärme durch umgebende Wärmequellen zugeführt wird und der auf einem niedrigen Temperaturniveau nahe 0° C steht, zu kühlen.

Durch den Trennwand-Wärmetausch der Motorabgase mit dem Wasserspeicher erfolgt eine drastische Abkühlung dieser Motorabgase bis auf etwa 5 bis 20° C, wodurch die kondensierbaren Anteile in den Motorabgasen kondensieren und Schadstoffe im gebildeten Kondensat gelöst werden.

Eine Wärmepumpenanlage mit einem solchen auf einem niedrigen Temperaturniveau nahe 0° C stehenden Wasserspeicher ist in der DE-AS 2 634 233 beschrieben, auf die zur näheren Erläuterung dieser Wärmepumpenanlage verwiesen wird.

Eine Abgasreinigung in Verbindung mit einem Kraftfahrzeugmotor ist aus der DE-OS 2 149 506 bekannt. Die hier vorgesehene Abgasreinigung beruht auf dem Prinzip der plötzlichen adiabatischen Volumenvergrößerung der Motorabgase zwecks Herabsetzung der Abgastemperatur auf den kritischen Punkt, um Kondensieren der im Motorabgas enthaltenen Wasserpartikel an den als Kern dienenden feinen Rußteilchen und in Lösunggehen anderer giftiger Abgasbestandteile zu bewirken.

Nach der Zeitschrift »Öl + Gasfeuerung« 12/1976, Seite 676, erfolgt bei einem als Antrieb für eine Heizungs-Wärmepumpenanlage benutzten Dieselmotor die Abgasreinigung dadurch, daß die Motorabgase durch den Feuchtigkeitsnebel eines nassen Abgaswäschers geschickt werden, damit Schadstoffe in den Abgasen im Feuchtigkeitsnebel in Lösung gehen.

Nach der DE-OS 2 216 437 werden zum Reinigen von Verbrennungsabgasen diese Abgase nach Durchtritt durch einen Schalldämpfer in einen Abgaskondensierbehälter geleitet, in dem eine Kühlschlange eines Kältemittelkreislaufs verlegt ist. Die Verbrennungsabgase sollen an der Kühlschlange gekühlt werden, so daß die Wasserbestandteile in den Abgasen kondensieren und sich an der Kühlschlange als Eis niederschlagen. Der Eispanzer um die Kühlschlange wird bis zu einer gewissen Dicke anwachsen, wonach die kondensierenden Wasserbestandteile in den Abgasen eine wäßrige, feste und kondensierte Abgasbestandteile enthaltende Eismasse bilden, die durch den Abgasstrom in einen Sammelbehälter mitgerissen wird. In diesem Sammelbehälter sammelt sich die Eismasse am Boden, während die Abgase darüber hinweg zum Ausgang des Sammelbehälters geleitet werden. Die Eismasse bzw. das Schmelzwasser wird von Zeit zu Zeit abgelassen oder tropft in ein Wasserreservoir ab, von wo es abgelassen oder — um die Bildung einer genügend dicken Eisschicht im Abgaskondensierbehälter zu gewährleisten — zum Teil zu einer Sprühdüse in der Auspuffleitung vor dem Schalldämpfer zurückgeleitet werden kann.

Nach der DE-PS 194 778 wird bei einer Karbonisiervorrichtung zum Reinigen von Säuredämpfe enthaltender Luft diese Luft durch eine Kondensationsflüssigkeit (die auch durch eine die Säure absorbierende Kalkschicht) ersetzt werden könnte) gedrückt, wobei die Luft ihren ganzen Säuregehalt an dieser Flüssigkeit abgibt. Die Flüssigkeit wird von Zeit zu Zeit erneuert. Es wird hier also eine Fremd-Reinigungsflüssigkeit zum Niederschlagen der Schadstoffe in der Luft benutzt, welche Reinigungsflüssigkeit von Zeit zu Zeit erneuert werden muß.

Gemäß einem Verfahren nach der DE-PS 953 294 werden die zu reinigenden Motorabgase durch einen mit Wasser und darüber auf einem Rost mit Kalksteinbrocken teilweise gefüllten Behälter geleitet. Das Einleiten der Abgase erfolgt durch ein nahe dem Behälterboden mündendes Zufuhrrohr, das zentrisch innerhalb eines vom Behälterboden aufragenden, halbhohen Rohres angeordnet ist, in dessen unterem Bereich Öffnungen zum Eintritt von Wasser vorgesehen sind. Die aus der Mündung des Zufuhrrohres austretenden Motorabgase steigen innerhalb des umgebenden Rohres hoch und reißen dabei Wasser mit, das vom oberen Ende des umgebenden Rohres mit den Abgasen über die Kalksteinbrocken gesprüht wird. Die Abgase werden dann um Prallwände herum zum Behälterauslaß geleitet. Eine Abgaskondensation kann bei dieser Abgasreinigungsanlage kaum erwünscht sein, da sonst aufgrund rasch anwachsender Kondensatmengen der Reinigungsbehälter vollaufen würde und die Abgas-Strömungswege versperrt werden würden.

Schließlich werden nach der DE-PS 308 759 die Abgase eines Verbrennungsmotors, zum Beispiel für Flugzeuge, durch Entspannung in einem Trichterstutzen gekühlt, was ein Niederschlagen der von den Gasen mitgeführten Betriebs- und Fettstoffe bewirken soll, um eine spätere wirtschaftliche Verwertung dieser Abfallstoffe zu ermöglichen. Eine Kondensation der Abgase ist nicht beabsichtigt, da eine solche gerade bei Flugzeugen unerwünschte Gewichtsprobleme mit sich brächte und zudem die Rückgewinnung der niedergeschlagenen Betriebs- und Fettstoffe erschweren würde. Die Abgase werden dann durch Öffnungen des Trichterstutzens in Kühlwasser geleitet, das sie in lebhafte Bewegungen bringen, wodurch die Gase nicht nur gespült, sondern auch gewaschen werden. Schließlich werden die Abgase an Kühlrohren noch weiter gekühlt und durch Überspülen von in einer Kammer befindlichem Kühlwasser weiter gereinigt.

Bei dem Kondensator nach der US-PS 3 236 216 handelt es sich nicht um einen Abgasreiniger, sondern um einen Kondensator zum Niederschlagen der Öldämpfe aus dem Kurbelgehäuse eines Verbrennungsmotors.

Die beschriebenen Verfahren zur Abgasreinigung arbeiten insofern noch vollkommen, als die in den Motorabgasen enthaltenen Schadstoffe nicht in der angestrebten Vollständigkeit in gebildetem Abgaskondensat oder einer anderen Reinigungsflüssigkeit niedergeschlagen werden.

Der vorliegenden Erfindung liegt die Aufgabe zugrunde, die Entgiftung der Abgase eines Verbrennungsmotors als Antrieb einer Wärmepumpenanlage zu verbessern und zu vereinfachen und insbesondere Ruß- und Teerpartikel sowie sonstige Schadstoffe in den Motorabgasen im wesentlichen vollständig niederzuschlagen.

Diese Aufgabe wird erfindungsgemäß mit dem Verfahren nach Anspruch 1 bzw. mit einer Abgasreinigungsanlage nach Anspruch 4 gelöst. Weiterbildungen der Erfindung sind in den Unteransprüchen beschrieben.

Nach der Erfindung werden ausgehend von dem Verfahren nach der DE-AS 2 744 615 bei einem Verbrennungsmotor als Antrieb für eine Heizungs-Wärmepumpenanlage die Motorabgase durch Trennwand-Wärmetausch mit dem Wasserspeicher gekühlt, wobei sich aufgrund von dessen niedrigen Temperaturniveau Kondensat niederschlägt und einer Wäsche in diesem niedergeschlagenen Kondensat unterzogen. Hierzu werden die Motorabgase durch zumindest einen Behälter geleitet, in dem sich Abgaskondensat ansammelt. Die Motorabgase werden unterhalb des Kondensatspiegels eingeleitet und oberhalb des Kondensatspiegels abgezogen. Solange das Abgaskondensat in dem Behälter im wesentlichen klares Wasser ist, bleibt nur wenig Ruß in diesem hängen, da die fetten Rußteilchen und Wasser sich gegenseitig abstoßen. Die Folge ist, daß die Motorabgase zunächst noch einen ziemlich hohen Rußgehalt haben. Im Gegensatz zum Verhältnis von Wasser zu Ruß haben aber die Rußteilchen untereinander eine sehr gute Haftung, so daß, wenn sich im Laufe der Zeit das anfänglich klare Wasser mit Rußteilen anreichert, die immer größer werdende Rußkonzentration dafür sorgt, daß wiederum ein immer größerer Anteil der in den durchströmenden Motorabgasen enthaltenen Rußpartikel an den schon im Wasser befindlichen Rußmengen anhaftet. Auf diese Weise wird beim Überschreiten einer »kritischen« Menge von bereits im Wasser enthaltenen Rußteilchen das Niederschlagen der nachströmenden Rußteilchen so vollkommen erfolgen, daß im wesentlichen kein Ruß mehr in den so gereinigten Motorabgasen enthalten bleibt. Auch sonstige in den Motorabgasen enthaltenen Schadstoffe werden bei weiterem Fortschreiten des Vorgangs im wesentlichen vollständig durch die Wäsche niedergeschlagen werden.

Bei einer vorherigen Kühlung der Motorabgase in einer den kalten Wasserspeicher durchlaufenden langen Leitung mit zum Teil ansteigenden Leitungszweigen vor dem Eintritt der Motorabgase in den Abgaskondensatbehälter stellt sich das Problem der Verrußung der Motorabgasleitung mit damit verbundener Querschnittsverengung. Besser ist es daher, die Motorabgase durch das gesammelte Abgaskondensat selbst, das sie durchtreten, zu kühlen, welches Abgaskondensat seinerseits gekühlt wird. Diese Kühlung des gesammelten Abgaskondensats kann einfach dadurch erfolgen, daß der Abgaskondensatbehälter innerhalb des Wasserspeichers angeordnet wird. Das gesammelte Abgaskondensat steht damit durch die Wandung des Behälters in ständigem Trennwand-Wärmetausch mit dem kalten Speicherwasser, so daß einerseits wie beabsichtigt das Abgaskondensat gekühlt und andererseits, wie ebenfalls erwünscht, der Wärmeinhalt der Motorabgase weitgehend in das Speicherwasser überführt wird.

Die heißen Motorabgase können also ohne vorherigen Umweg unmittelbar in den Abgaskondensatbehälter geleitet werden, wobei eine Vorkühlung insofern zweckmäßig sein kann, als ein Teil des Wärmeinhalts der Motorabgase durch Trennwand-Wärmetausch in einen Heizungskreislauf abgegeben werden kann. Die benötigte Abgasleitung, die vom Verbrennungsmotor nach Trennwand-Wärmetausch mit dem Heizungskreislauf unmittelbar in den Abgaskondensatbehälter unterhalb des Kondensatspiegels einmündet, ist vergleichsweise kurz, so daß sie vom Verbrennungsmotor aus im wesentlichen abfallend verlegt werden kann und sich somit keine Kondensatansammlungen innrhalb der Leitung, auch nicht bei Stillstand des Verbrennungsmotors einstellen. Das Mündungsende der Motorabgasleitung ist unterhalb des Kondensatspiegels vorteilhaft in einigen Windungen nach unten zum Boden des Behälters geführt, so daß die Motorabgase vor dem Austritt aus der Leitung bereits durch das Abgaskondensat vorgekühlt sind. Ein Verrußen dieser Leitungswindungen ist ausgeschlossen, da bei jedem Stillstand des Verbrennungsmotors Abgaskondensat in den Windungen hochsteigt und diese auswäscht.

Das sich während des Betriebs des Verbrennungsmotors ansammelnde Abgaskondensat muß von Zeit zu Zeit abgeführt werden. Dies erfolgt durch einen Behälterüberlauf, der unter den Kondensatspiegel eintauchen muß, damit über ihn keine Motorabgase entweichen können. Durch diesen Behälterüberlauf wird mit Schadstoffen auf den genannten »kritischen« Wert angereichertes Abgaskondensat abgeführt.

Um das mit Schadstoffen angereicherte Abgaskondensat in die gemeindliche Kanalisation abführen zu können, kann es zweckmäßig sein, insbesondere den pH-Wert des Abgaskondensats zu messen und zu steuern, indem beispielsweise in den Abgaskondensatbehälter Kalksteinbrocken eingegeben oder sonstige Neutralisierungschemikalien zugeleitet werden.

Eine Verbesserung in der Entgiftung der Abgase läßt sich erzielen, wenn anstelle eines einzigen eine Reihe hintereinandergeschalteter Abgaskondensatbehälter vorgesehen wird. Die jeweils oberhalb des Kondensatspiegels eines vorherigen Behälters abgezogenen Motorabgase werden unterhalb des Kondensatspiegels des nachfolgenden Abgaskondensatbehälters eingeleitet. Lediglich beim letzten Behälter kann es zweckmäßig sein, die Motorabgase oberhalb des Flüssigkeitsspiegels zuzuführen, damit nicht durch Aufwühlen des Abgaskondensats erneut Schadstoffe austreten können. Die einzelnen Abgaskondensatbehälter sind durch Überläufe untereinander verbunden, wobei der Überlauf des letzten Behälters beispielsweise zur Kanalisation führt.

Die Erfindung wird nachfolgend anhand beigefügter Zeichnung näher erläutert, die schematisch ein Ausführungsbeispiel einer erfindungsgemäßen Abgasreinigungsanlage in Anwendung bei einem Verbrennungsmotor als Antrieb einer Heizungswärmepumpenanlage mit einem auf einem niedrigen Temperaturniveau nahe 0° C stehenden Wasserspeicher gemäß DE-AS 2 634 233 zeigt.

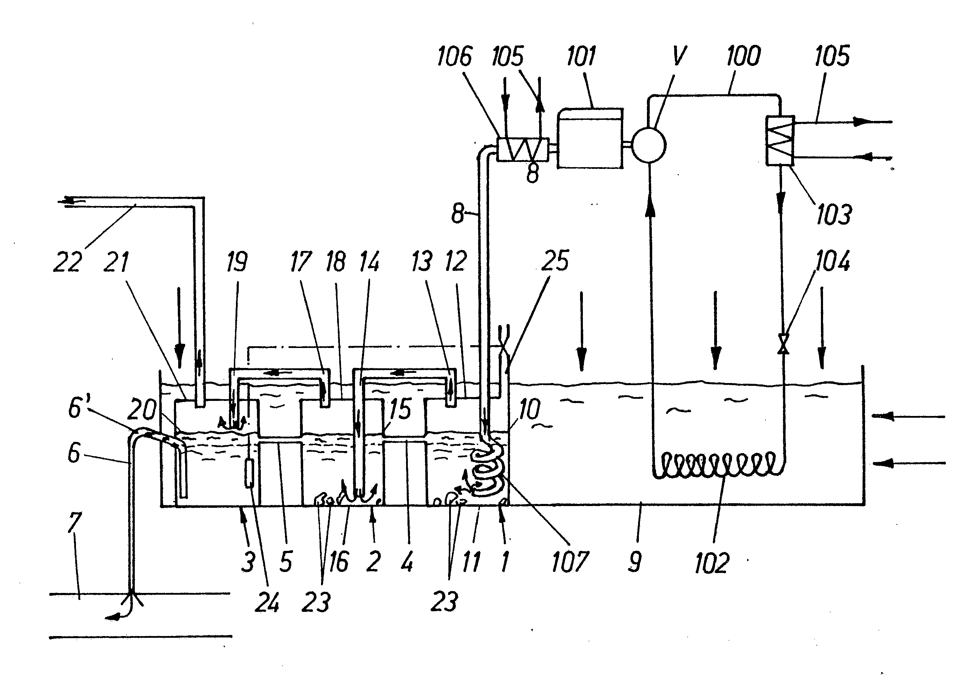

Die in der Zeichnung dargestellte Abgasreinigungsanlage besitzt drei hintereinandergeschaltete Abgaskondensatbehälter 1, 2 und 3. Die Behälter sind durch Überläufe 4 und 5 miteinander verbunden, während ein Überlauf 6 vom letzten Behälter 3 zur gemeindlichen Kanalisation 7 führt. Der Überlauf 6 des letzten Reinigungsbehälters 3 mündet nahe dem Behälterboden, und mit seiner höchsten Stelle 6' liegt er oberhalb der Überläufe 4 und 5 der vorherigen Abgaskondensatbehälter 1 bzw. 2, so daß der Kondensatspiegel in den Behälter oberhalb der Einmündungsöffnung der Überläufe 4, 5 liegt und damit keine Motorabgase im Kurzschluß entweichen können.

Die Behälter 1, 2 und 3 sind innerhalb eines Wasserspeichers 9 angeordnet, der Teil einer Wärmepumpenanlage 100 ist und auf einem niedrigen Temperaturniveau nahe 0° C steht. Die Wärmepumpenanlage 100 setzt sich aus einem durch einen Dieselmotor 101 angetriebenen Verdichter V, einem in den Wasserspeicher 9 eintauchenden Verdampfer 102, einem Kondensator 103 und aus einer Drossel 104 zusammen. Der Wasserspeicher 9 dient als Wärmequelle, der durch den Kältemittelverdampfer 102 Wärme entzogen wird, die im Kondensator 103 einem Heizungskreislauf 105 zugeführt wird. In den Wasserspeicher 9 gelangt einerseits Abgaswärme über das Abgaskondensat und die Wandung der Behälter 1, 2 und 3 und andererseits, wie durch Pfeile angedeutet, Umgebungswärme.

Die Motorabgasleitung 8 des Dieselmotors 101 ist auf kurzem Wege und abfallend in den Behälter 1 unter den Kondensatspiegel 10 geführt. Wie dargestellt, steht die Motorabgasleitung 8 über einen Trennwand-Wärmetauscher 106 mit dem Heizungskreislauf 105 in Verbindung, um Abgaswärme direkt, d. h. ohne Umweg über die Wärmepumpenanlage, dem Heizungskreislauf zuzuführen. Dabei erfolgt eine erste Absenkung der Motorabgastemperatur auf Werte, welche die Verwendung von Kunststoffmaterialien für den Abgasreiniger erlauben.

Die Motorabgasleitung 8 ist unterhalb des Kondensatspiegels 10 in Windungen 107 zum Boden 11 des Behälters 1 geführt. Oberhalb des Kondensatspiegels 10 nahe dem Behälterdeckel 12 dieses ersten Abgaskondensatbehälters 1 mündet eine Motorabgas-Abführleitung 13, die zur Motorabgas-Zuführleitung 14 des zweiten Behälters 2 wird. Diese Zuführleitung 14 mündet wiederum unterhalb des Kondensatspiegels 15 im zweiten Behälter nahe dem Behälterboden 16. Die Motorabgas-Abführleitung 17 des zweiten Behälters 2 schließt nahe dem Behälterdeckel 18 an und mündet als Motorabgas-Zuführleitung 19 in den dritten Behälter 3 dicht über der Kondensatoroberfläche 20. Aus dem dritten Behälter 3 werden die fast vollständig gereinigten Motorabgase durch die nahe dem Behälterdeckel 21 mündende Abgasleitung 22 ins Freie abgegeben.

Durch die Niederschläge von Schadstoffen wird das Abgaskondensat in den Behälter 1, 2 und 3 sauer, weshalb zu Neutralisationszwecken in die Behälter Kalksteinbrocken 23 eingegeben werden. Um das mit niedergeschlagenen Schadstoffen angereicherte Abgaskondensat unbedenklich in die Kanalisation 7 abführen zu können, kann es auch notwendig werden, weitere Zusatzstoffe z. B. durch einen ventilgesteuerten Zufluß 25 am Behälter 1 einzugeben. Die Dosierung der Zusatzstoffe erfolgt vorteilhaft durch eine insbesondere auf den pH-Wert des Abgaskondensats im letzten Behälter 3 ansprechende Meßelektrode 24.

## Patentansprüche

1. Verfahren zur Entgiftung der Abgase eines Verbrennungsmotors als Antrieb einer Heizungs-Wärmepumpenanlage mit einem als Wärmequelle für den Verdampfer der Wärmepumpenanlage dienenden Wasserspeicher, dem auch Wärme durch umgebende Wärmequellen zugeführt wird und der ein niedriges Temperaturniveau nahe Null Grad Celsius haben kann, indem die Motorabgase durch Trennwand-Wärmetausch mit dem Wasserspeicher auf ein niedriges Temperaturniveau gekühlt werden, um die Kondensierbaren Anteile in den Motorabgasen zu kondensieren und Schadstoffe in gebildeten Kondensat zu lösen, dadurch gekennzeichnet, daß das Abgaskondensat gesammelt und die Motorabgase durch angesammeltes Abgaskondensat hindurchgeleitet werden, und daß mit niedergeschlagenen Schadstoffen angereichertes Abgaskondensat kontinuierlich oder intermittierend abgeführt wird.

2. Verfahren nach Anspruch 1, dadurch gekennzeichnet, daß das angesammelte Abgaskondensat durch Trennwand-Wärmetausch mit dem Wasserspeicher gekühlt wird.

3. Verfahren nach Anspruch 1 oder 2, dadurch gekennzeichnet, daß die Motorabgase in Trennwand-Wärmetausch mit einem Heizungskreislauf vorgekühlt werden.

4. Abgasreinigungsanlage zur Durchführung des Verfahrens nach Anspruch 1 bei einem Verbrennungsmotor als Antrieb einer Heizungs-Wärmepumpenanlage mit einem als Wärmequelle für den Verdampfer der Wärmepumpenanlage dienenden Wasserspeicher, dem auch Wärme durch umgebende Wärmequellen zugeführt wird und der ein niedriges Temperaturniveau nahe Null Grad Celsius haben kann, mit einem Trennwand-Wärmetauscher zur Kühlung der Motorabgase durch den Wasserspeicher, gekennzeichnet durch einen Abgaskondensatbehälter (1, 2, 3) zum Ansammeln von Abgaskondensat und zum Durchleiten der Motorabgase und durch eine Einrichtung (Überlauf 6) zum Abführen einer mit Schadstoffen angereicherten Abgaskondensatmenge aus dem Behälter bei Überschreiten eines bestimmten Flüssigkeitsstandes.

5. Abgasreinigungsanlage nach Anspruch 4, dadurch gekennzeichnet, daß der Abgaskondensatbehälter (1, 2, 3) in Trennwand-Wärmetausch mit dem Wasserspeicher (9) steht.

6. Abgasreinigungsanlage nach Anspruch 5, dadurch gekennzeichnet, daß der Abgaskondensatbehälter (1, 2, 3) innerhalb des Wasserspeichers (9) angeordnet ist.

7. Abgasreinigungsanlage nach Anspruch 5 oder 6, dadurch gekennzeichnet, daß die Motorabgasleitung (8) innerhalb des Abgaskondensatbehälters (1) und unterhalb des Kondensatspiegels (10) in Windungen (107) zum Boden (11) des Behälters geführt ist.

8. Abgasreinigungsanlage nach einem der Ansprüche 4 bis 7, gekennzeichnet durch einen Trennwand-Wärmetauscher (106) zum Vorkühlen der Motorabgase bei gleichzeitiger Überführung von Motorabgaswärme in einen Heizungskreislauf (105).

9. Abgasreinigungsanlage nach einem der Ansprüche 4 bis 8, gekennzeichnet durch die Hintereinanderschaltung von mehreren Abgaskondensatbehältern (1, 2, 3) derart, daß die Motorabgas-Abführleitung (13, 17) eines vorderen Behälters (1, 2) die Motorabgas-Zuführleitung (14, 19) eines nachfolgenden Behälters (2, 3) bildet und die Motorabgas-Abführleitung (22) des letzten Behälters (3) ins Freie mündet und daß die Behälter (1, 2) durch Abgaskondensat-Überläufe (4, 5) miteinander verbunden sind, während der Überlauf (6) des letzten Behälters (3) zur Kanalisation (7) oder in einen Kondensataufbewahrungsbehälter mündet.

10. Abgasreinigungsanlage nach einem der Ansprüche 4 bis 9, gekennzeichnet durch in das Abgaskondensat eintauchende Meßelektroden (24) zur Messung insbesondere des pH-Wertes und zur Steuerung eines Zuflusses von Zusatzstoffen zur Neutralisierung des abzuführenden Abgaskondensats.

**Claims**

1. Process for detoxicating the waste gases from an internal combustion engine used for driving a heating/heat-pump system possessing a water reservoir which serves as a heat source for the evaporator of the heat-pump system, and to which heat is also supplied by heat sources in the vicinity and which can be at a low temperature level, close to zero degrees Centigrade, in which process the waste gases from the engine are cooled to a low temperature level by heat exchange with the water reservoir, via separating walls, in order to condense the condensable fractions in the waste gases from the engine, and to dissolve pllutants in the condensate which is formed, characterised in that the waste-gas condensate is collected, and the waste gases from the engine are led through the accumulated waste-gas condensate, and in that wastegas condensate, enriched in precipitated pollutants, is led off, continuously or intermittently.

2. Process according to Claim 1, characterised in that the accumulated waste-gas condensate is cooled by heat exchange with the water reservoir, via separating walls.

3. Process according to Claim 1 or 2, characterised in that the waste gases from the engine are precooled, exchanging heat with a heating circuit, the heat exchange taking place via separating walls.

4. Waste-gas purification unit for carrying out the process according to Claim 1, in the case of an internal combustion engine used for driving a heating/heat-pump system possessing a water reservoir which serves as a heat source for the evaporator of the heat-pump system, to which heat is also supplied by heat sources in the vicinity, and which can be at a low temperature level, close to zero degrees Centigrade, this purification unit possessing a heat exchanger, of the separating-wall type, so that the water reservoir may be used for cooling the waste gases from the engine, characterised by a waste-gas condensate container (1, 2, 3) for collecting the waste-gas condensate, and for ducting-through the waste gases from the engine, and by a device (overflow 6) for leading off a flow of waste-gas condensate, from the container, whenever a defined liquid level is exceeded, this flow of waste-gas condensate being enriched in pollutants.

5. Waste-gas purification unit according to Claim 4, characterised in that the waste-gas condensate container (1, 2, 3) is arranged in a manner such that it can exchange heat with the water reservoir (9), via separating walls.

6. Waste-gas purification unit according to Claim 5, characterised in that the waste-gas condensate container (1, 2, 3) is located inside the water reservoir (9).

7. Waste-gas purification unit according to Claim 5 or 6, characterised in that the line (8) carrying the waste gas from the engine is led inside the waste-gas condensate container (1) and, beneath the surface (10) of the liquid condensate, down to the bottom (11) of the container, in convolutions (107).

8. Waste-gas purification unit according to one of Claims 4 to 7, characterised by a heat exchanger (106), of the separating-wall type, for the purpose of precooling the waste gases from the engine while at the same time transferring heat from these gases into a heating circuit (105).

9. Waste-gas purification unit according to one of Claims 4 to 8, characterised by the series-connection of a plurality of waste-gas condensate containers (1, 2, 3), in a manner such that the engine waste-gas discharge line (13, 17) of an upstream container (1, 2) forms the engine waste-gas supply line (14, 19) of a downstream container (2, 3), the engine waste-gas discharge line (22) of the last container (3) opening into the outside air, and in that the containers (1, 2) are interconnected by waste-gas condensate-overflows (4, 5), while the overflow (6) of the last container (3) opens into the sewage facilities (7), or into a condensate-storage tank.

10. Waste-gas purification unit according to one of Claims 4 to 9, characterised by measuring electrodes (24), which dip into the waste-gas condensate in order to measure, in particular, the pH, and in order to control an inflow of additives for neutralising the waste-gas condensate which is to be discharged.

**Revendications**

1. Procédé pour supprimer la toxicité des gaz d'échappement d'un moteur à combustion interne servant à l'entraînement d'une installation de chauffage par pompe de chaleur, avec un accumulateur d'eau, servant de source de chaleur pour l'évaporateur de l'installation à pompe de chaleur, auquel est amenée également de la chaleur provenant de sources de chaleur environnantes, et qui peut présenter un niveau de température très bas, voisin de zéro degré Celsius, les gaz d'échappement du moteur étant refroidis à un bas niveau de température, par échange de chaleur, à travers une paroi séparatrice, avec l'accumulateur d'eau, en vue de condenser la fraction condensable dans les gaz d'échappement du moteur et de dissoudre les produits nocifs dans le condensat formé, procédé caractérisé en ce que le condensat de gaz d'échappement est collecté et les gaz d'échappement du moteur sont conduits à travers ce condensat rassemblé, et le condensat, enrichi avec les produits nocifs précipités, est évacué en continu ou par intermittences.

2. Procédé suivant la revendication 1, caractérisé en ce que le condensat de gaz d'échappement rassemblé est refroidi par échange de chaleur, à travers une paroi séparatrice, avec l'accumulateur d'eau.

3. Procédé suivant la revendication 1 ou 2, caractérisé en ce que les gaz d'échappement du moteur sont soumis à un pré-refroidissement par échange de chaleur, à travers une paroi séparatrice, avec un circuit de chauffage.

4. Installation d'épuration de gaz d'échappement pour application du procédé suivant la revendication 1, dans le cas d'un moteur à combustion interne servant à l'entraînement dans une installation de chaffage à pompe de chaleur, avec accumulateur d'eau, servant de source de chaleur pour l'évaporateur de l'installation à pompe de chaleur, auquel est amenée également de la chaleur provenant de sources de chaleur environnantes, et qui peut présenter un bas niveau de température voisin de zéro degré Celsius, avec un échangeur de chaleur à paroi séparatrice pour réaliser un refroidissement des gaz d'échappement du moteur au moyen de l'accumulateur d'eau, installation caractérisée par un réservoir à condensat de gaz d'échappement (1, 2, 3) pour collecter un condensat de gaz d'échappement et canaliser les gaz d'échappement du moteur, et par une installation (trop plein de débordement 6) pour évacuer du réservoir une quantité de condensat de gaz d'échappement enrichie en produits nocifs, par dépassement d'un niveau de liquide déterminé.

5. Installation d'épuration des gaz suivant la revendication 4, caractérisée en ce que le réservoir à condensat de gaz d'échappement (1, 2, 3) est disposé en relation d'échange de chaleur avec l'accumulateur d'eau (9).

6. Installation d'épuration de gaz d'échappement suivant la revendication 5, caractérisée en ce que le réservoir à condensat de gaz d'échappement (1, 2, 3) est disposé à l'intérieur de l'accumulateur d'eau (9).

7. Installation d'épuration de gaz d'échappement suivant l'une des revendications 5 ou 6, caractérisée en ce que la conduite (8) de gaz d'échappement du moteur s'étend à l'intérieur du réservoir de condensat de gaz d'échappement (1) et au-dessous du niveau supérieur du condensat (10), sous la forme de serpentin (107) vers le fond (11) du réservoir.

8. Installation d'épuration de gaz d'échappement suivant l'une quelconque des revendications 4 à 7, caractérisée par un échangeur de chaleur à paroi séparatrice (106) destiné au pré-refroidissement du gaz d'échappement du moteur, et, simultanément, à la transmission de la chaleur des gaz d'échappement dans un circuit de chauffage (105).

9. Installation d'épuration de gaz d'échappement suivant l'une quelconque des revendications 4 à 8, caractérisée par la connexion l'un à la suite de l'autre de plusieurs réservoirs de condensat de gaz d'échappement (1, 2, 3) de telle sorte que la conduite d'évacuation de gaz d'échappement du moteur (13, 17) forme un réservoir antérieur (1, 2), la conduite d'amenée de gaz d'échappement (14, 19) forme un réservoir suivant, et la conduite d'évacuation de gaz d'échappement (22) forme le dernier réservoir (3) débouchant à l'air libre, les réservoirs (1, 2) étant réunis entre eux par débordement de trop plein de condensat (4, 5), tandis que le trop plein de débordement (6) du dernier réservoir (3) débouche dans une canalisation (7) ou dans un réservoir de stockage du condensat.

10. Installation d'épuration des gaz suivant l'une quelconque des revendications 4 à 9, caractérisée par une électrode de mesure (24) plongeant dans le condensat de gaz d'échappement, pour mesurer en particulier la valeur de pH et pour commander une introduction de produits d'addition en vue de la neutralisation du condensat de gaz d'échappement à évacuer.

106  105  101  V  100  105

8

22  21  19  17  18  14  13  12  25

8

103

104

6'  20  15  10

6  9  102

7  3  5  16  2  4  11  1  107

24  23  23

0 029 033